# EUROPEAN PATENT SPECIFICATION

(11) **EP 4 170 405 B1**
(45) Date of publication and mention of the grant of the patent: **15.10.2025**
(21) Application number: 21203484.7
(22) Date of filing: 19.10.2021
(51) Int. Cl.: G02B 7/00, G02B 21/24, G02B 21/36, G03B 5/02

(54) **OPTICAL ADJUSTMENT DEVICE AND MICROSCOPE COMPRISING SUCH**
VORRICHTUNG ZUR OPTISCHEN ANPASSUNG UND MIKROSKOP DAMIT
DISPOSITIF DE RÉGLAGE OPTIQUE ET MICROSCOPE LE COMPRENANT

(43) Date of publication of application: 26.04.2023
(73) Proprietor: Leica Microsystems CMS GmbH, 35578 Wetzlar (DE)
(72) Inventor: FEHRER, Dirk, 69251 Gaiberg (DE)
(74) Representative: Maiwald GmbH

(56) References cited:
- US-A1- 2012 200 692
- US-A1- 2015 350 501
- US-B2- 8 937 665

## Description

The invention relates to an optical adjustment device, comprising a housing and an optics carrier. The invention further relates to a microscope comprising such an optical adjustment device.

In the art, optical elements or optical assemblies may be attached to one another by mechanical means like for instance a so-called "bayonet mount" or a "C mount" being representative of other possible lens mounts. These mounts allow for a coarse alignment, as they may define the position of the optical element or optical assembly to be attached to one another. These prior art solutions, however, lack the possibility of a fine adjustment of optical elements provided. US 2015 350 501 A1 describes an optical adapter for mobile media devices with a camera. US 2012 200 692 A1 describes a method and system for imaging high density biochemical arrays with sub-pixel alignment. US 8 937 665 B2 describes an optical image stabilizer actuator and camera module having the same actuator.

One object of the present disclosure is therefore to improve the adjustability of prior art optical adjustment devices and prior art microscopes.

This may be obtained by an optical adjustment device that comprises the housing and the optics carrier, wherein the optics carrier is at least partially supported translatable by the housing, the optics carrier further comprising at least one optical element with an optical axis, the optical adjustment device further comprising a translating actuator assembly adapted to translate the optics carrier with respect to the housing along a lateral direction essentially perpendicular to the optical axis.

Further, this may be obtained by a microscope comprising an optical adjustment device according to an embodiment of the present invention, wherein the optical adjustment device is arranged in an optical path between an optical output of the microscope and an imaging device, the optical output being adapted to output light to the imaging device.

By the optics carrier being translatable with respect to the housing, the at least one optical element may be translated with respect to the housing, wherein the latter remains stationary.

Further features may improve the above described solutions. These features are independent from one another and may be arbitrarily combined with each other. Further, features not being indicated as being essential may be arbitrarily omitted from different embodiments of the present invention.

In this disclosure, the at least one optical element that is comprised in the optics carrier and carried by it is not limited to a lens. The at least one optical element may be any active or passive optical element like a polarizer, an optical fiber, a spatial light modulator, an acousto-optical or electro-optical deflector or modulator, a prism, a grating or any other possible optical element.

Each of these non-limiting optical elements may be held by the optics carrier and translated only along the lateral direction, i.e. they are not tilted.

Each of the above-mentioned possible optical elements may define an optical axis. If the optical element is for instance a spatial light modulator that itself does not define an optical axis, the optical axis may be defined as the central axis of the entire optical adjustment device, in particular defined by the optical carrier.

The optical adjustment device may be embodied as a C-mount unit, i.e. provided with a C-mount connector. The C-mount connector may provide a coarse alignment of the at least one optical element supported by the optics carrier, wherein the translating actuator assembly may be adapted to provide a fine alignment of said at least one optical element.

While a coarse alignment may relate to a positioning accuracy in the order of millimeters, a fine alignment may relate to a positioning accuracy in the sub-micrometer range.

A translation of the optics carrier with respect to the housing may be along an axis of translation which is oriented along a direction that is oriented under an angle between 70 and 110 degrees to the optical axis, more preferably between 80 and 100 degrees, even more preferably between 85 and 95 degrees and most preferably along a direction being essentially perpendicular to the optical axis. Essentially perpendicular is to be understood as also comprising angles between the axis of translation and the optical axis that deviate by up to +/- 1 degree, +/- 2 degrees, up to +/-20 degrees from an angle of 90 degrees between the optical axis and the axis of translation. Any arbitrary combination of upper and lower limits of the deviation is possible, for instance a deviation of the angle between - 15 degrees and + 2 degrees.

During a translation of the optics carrier with respect to the housing, an angular orientation between the optics carrier and the housing is maintained. Thus, the optics carrier is translated only along a direction perpendicular to the optical axis. The optical axis of the optics carrier is translated therewith in a parallel manner only, an angular orientation is not altered.

In order to limit a translation of the optics carrier with respect to the housing only along a direction perpendicular to the optical axis of the optics carrier, the optics carrier may comprise glide surfaces at a first and a second end of the optics carrier, the glide surfaces being oriented essentially perpendicular to the optical axis of the optics carrier. Thus, when translating the optics carrier with respect to the housing, the optics carrier will glide along these two glide surfaces that prevent tilting of the optics carrier with respect to the housing.

The housing of the optical adjustment device may be an outer housing and the optics carrier may be an inner optics carrier. The inner optics carrier may be received within the outer housing. Preferably, the inner optics carrier may be entirely received within the outer housing.

According to the claims, the translating actuator assembly comprises a linear actuator of which one part is fixed relative to the housing, wherein the linear actuator has an actuating direction essentially perpendicular to the optical axis, wherein the linear actuator is adapted to displace the optics carrier with respect to the housing essentially perpendicular to the optical axis along the actuating direction.

The linear actuator may be embodied as a micrometer screw, an electrically controlled linear actuator like a translation stage or any other suitable linear actuator that is adapted to displace the optics carrier with respect to the housing at a translation accuracy in the sub-millimeter range. Also here, essentially perpendicular is to be understood as also comprising angles between the actuating direction and the optical axis that deviate by +/- 1 degree, +/- 2 degrees, up to +/- 20 degrees from an angle of 90 degrees between the optical axis and the axis of translation. Any arbitrary combination of upper and lower limits of the deviation is possible, for instance a deviation of the angle between - 15 degrees and + 2 degrees.

One embodiment of the optical adjustment device is further improved in that the optical adjustment device may comprise a pivotable lever with a portion fixed relative to the housing, the lever being adapted to be deflected by the linear actuator and in that the lever may comprise an actuation section, the actuation section being adapted to abut and displace the optics carrier upon actuation of the linear actuator.

A pivotable lever has the advantage that a predetermined lever transmission may be obtained by the lever design, in particular the lengths of the two lever arms with respect to a fulcrum. The fulcrum may be positioned or be formed in the actuation section of the lever.

The lever may have a free end and a fixed end which may be supported at the housing. The free end may be deflectable and the actuation section may be located between the free end and the fixed end.

According to the claims, the optical adjustment device comprises a slider which slidingly rests against the optics carrier.

The slider may be a part of the translating actuator assembly. The slider may be embodied as a guiding means for confining a translation of the optical carrier to two dimensions. The slider may thus comprise a slide surface that may preferably be oriented parallel to the actuation direction of the linear actuator. When the linear actuator is actuated, the slider may guide the optics carrier along its slide surface.

In one embodiment, the slide surface may be provided at the optics carrier, wherein said slide surface may abut a slide member that may be provided at the housing. In a different embodiment, the slide surface may be provided at the housing and the slide member may be provided at the optics carrier.

The slider may thus comprise a slide surface and a slide member. Both, slide surface and slide member may comprise means for decreasing friction between one another, like lubrication, friction-decreasing coatings, roll- or ball-bearings and the like.

One simple embodiment of the present invention may provide a optics carrier that has at least one flat surface parallel to the optical axis, wherein at least a portion of said surface may form the slide surface. In one embodiment, the optics carrier may have a rectangular or square cross-section and one side surface of a such embodied optics carrier may form the slide surface. The cross section of the optics carrier may also be circular.

The slider may be provided at a distance to the actuation section of the lever. The slider may be physically separated from the actuation section.

It is advantageous if the slide surface is oriented parallel to the actuation direction, such that upon actuation of the linear actuator, the slide member and the slide surface may slide along one another along the actuating direction of the linear actuator.

In a further embodiment of the inventive optical adjustment device, a spring assembly may be provided on a side of the optics carrier opposite to the translating actuator assembly, the spring assembly being adapted for biasing the optics carrier towards the translating actuator assembly.

The spring assembly is adapted to ensure that the optics carrier moves along with the linear actuator even if the linear actuator is contracted. By the pre-tensioned spring member, the linear actuator may define both directions, along and opposite the actuating direction.

The spring assembly may be supported at the housing. In one embodiment, the spring assembly may be provided opposite to the slider.

The spring assembly may be located approximately opposite to the slider, wherein the spring assembly may comprise a resilient structure that is adapted to press the optics carrier in a direction towards the linear actuator. Here, conventional leaf springs, coil springs or a volume body comprising a compressible and in particular reversibly compressible resilient material, may be applied. The spring assembly may also act as a pulling spring that is arranged at the same side as the lever assembly and adapted to pull the optics carrier towards the lever assembly. The spring assembly may be adapted to act against the optics carrier at at least two bearing points spaced apart from each other in an axial direction, the axial direction being oriented parallel to the optical axis.

The two bearing points may be embodied as bearing positions or abutment positions at which the optics carrier and the spring assembly abut one another. Such an abutment at two positions being spaced apart from each other may increase a stability of such a support with respect to tilt of the optics carrier. Two bearing points are preferred over one bearing point, the latter having the drawback of a possible tilt of the optics carrier if no further provisions acting against such a tilt are taken into consideration.

The spring assembly may comprise a leaf spring. Due to the flat design of a leaf spring, two sections of the leaf spring being spaced apart from one another along the axial direction may form the two bearing points abutting the optics carrier.
the leaf spring may form a bearing line oriented parallel to the optical axis. Along said bearing line the leaf spring may support the optics carrier.

Preferably, the at least two bearing points are formed on a side of the optics carrier opposite the side at which the actuation section is positioned. Most preferably the at least two bearing points and the actuation section may be positioned essentially diametrically opposed to each other.

In a further improved embodiment of the optical adjustment device, an axial position of the actuation section and/or an axial position of the slider of a corresponding embodiment comprising a slider, may be located between the at least two bearing points.

The actuation section and/or the slider does thus form a triangle of forces with the two bearing points. The following simplified situation shall be understood for explanation of said forces and the tendency of the optics carrier to tilt when exerting a force on the optics carrier. The optics carrier may be considered or modelled as a bar supported by the spring member at two bearing points that are spaced apart from one another along a z-direction. The actuation section and/or the slider may abut the bar on an opposing side of the bar, wherein in z-direction, the actuation section and/or the slider abut the bar between the (z-direction positions of the) two bearing points. The bar may thus be supported at two portions and such an assembly represents a stable system having no tendency to tilt around the axis of said bar. This principle may be applied to the corresponding embodiment of the inventive optics carrier, the linear actuator and the two bearing points as well. This embodiment of the optical adjustment device is also stable against a tilt of the optics carrier about the optical axis.

In a further advantageous embodiment of the inventive optical adjustment device the optics carrier may comprise a notch that is provided circumferentially around the optical axis on an outer surface of the optics carrier, wherein the leaf spring may be received within the notch.

The notch may thus define a predetermined receiving position of the spring assembly. The notch may be further adapted to facilitate positioning the spring assembly with respect to the optics carrier during assembly, as well as to facilitate positioning the optics carrier with respect to the housing. The notch may comprise steep edges that prevent the spring assembly from being removed from the notch once received therein. For removing the spring assembly from the notch it may be necessary to deflect the spring assembly away from the notch and subsequently remove the optics carrier.

The notch may be provided with an inlay and/or coating to reduce or prevent any wear between the notch and the spring assembly.

In a further advantageous embodiment the translating actuator assembly may be a first translating actuator assembly and the actuating direction may be a first actuating direction, wherein the optical adjustment device may comprise a second translating actuator assembly in addition to the first translating actuator assembly, the second translating actuator assembly may comprise a second linear actuator supported at the housing, the second linear actuator having a second actuating direction that may be oriented essentially perpendicular to the optical axis and that may be different from the first actuating direction, wherein the second linear actuator is adapted to displace the optics carrier with respect to the housing essentially perpendicular to the optical axis along the second actuating direction.

The first translating actuator and the second translating actuator may be actuated independent from one another.

This embodiment of the inventive optical adjustment device may be further improved in that the first actuating direction and the second actuating direction are oriented perpendicular to each other.

This allows for adjusting the position of the optics carrier and thus the optical axis in two dimensions easily addressable by application of a Cartesian coordinate system.

A movement of the optics carrier with respect to the housing may thus be a superposition of a movement along the first actuating direction and along the second actuating direction.

In the embodiment comprising two translating actuator assemblies, (a first translating actuator assembly and a second translating actuator assembly), each of the translating actuator assemblies may comprise a spring assembly. In this case, the corresponding spring assembly is located basically opposite the corresponding translating actuator assembly. However, in another preferred embodiment, one common spring assembly is provided that actuates against the first translating actuator assembly and against the second translating actuator assembly. In this case, the spring assembly may neither directly oppose the first linear translating actuator assembly, nor directly oppose the second linear translating actuator assembly (a position directly opposite would correspond to an angle of 180°) but may be oriented at an angle of approximately 135° to each of the translating actuator assemblies. Preferably, the spring assembly comprises a leaf spring that at least partially abuts a circumferential portion of the optics carrier.

In one embodiment, the slider of the optical adjustment device may be a first slider and the optical adjustment device may comprise a second slider, which slidingly rests against the optics carrier. The first slider may be adapted to guide a movement of the optics carrier along the first actuating direction, wherein the second slider may be adapted to guide a movement of the optics carrier along the second actuating direction. Sliding along the first or second actuating direction may be independent from one another.

In one embodiment of the optical adjustment device, the first translating actuator assembly may comprise the second slider and the second translating actuator assembly may comprise the first slider.

The first slider may be provided in the actuation section of the second translating actuator assembly. Accordingly, the second slider may be provided in the actuation section of the first translating actuator assembly.

Thus, each of the first and second actuation section may be adapted to actuate the optics carrier along or opposite the first or second actuation direction and at the same time providing a slider of the respective other second or first translating actuator assembly for guiding the optics carrier along the second or the first actuation direction. The slider of the first translating actuator assembly may comprise at least one of a slide surface and a slide member which is in contact with the optics carrier and which may extend along the second actuating direction. Further, the slider of the second translating actuator assembly may comprise at least one of a slide surface and a slide member which is in contact with the optics carrier and which extends along the first actuating direction.

Each of the sliders of the corresponding first or second translating actuator assembly may be limited by at least one stop element. A length of the slide surface of the slider of the first (or second) translating actuator assembly may be larger than a stroke of the second (or first) translating actuator.

This may provide continuous guiding of the optics carrier along the first or second translating direction. A limit stop may be adapted to prevent the optics carrier being moved out of this guided region.

Any of the previous embodiments of the inventive optical adjustment device may be improved by further comprising an axial translating actuator assembly that may be adapted to translate the optics carrier with respect to the housing along an axial direction, wherein the axial direction may be oriented essentially parallel to the optical axis.

This embodiment has the advantage that it is adapted to adjust properties of the at least one optical element that depend on an axial position, i.e. on a position along the axial direction or the optical axis. The axial translating actuator assembly may be adapted to adjust a focus position that, upon actuation of the axial translating actuator assembly, may be shifted along the optical axis. This embodiment may thus be applied for readjusting a focus of the at least one optical element.

This embodiment of the inventive optical adjustment device therefore may provide adjustment means that are adapted to modify or alter the lateral position of an image as well as a correct focusing of the image on an image sensor in order to obtain a sharp image.

To improve this embodiment of the optical adjustment device, the axial translating actuator may comprise an actuator sleeve that at least partially receives the optics carrier and that is supported at the housing, wherein the optics carrier may be adapted to be rotatable around the axial direction and adapted to transform a rotation into a movement of itself along the axial direction, wherein the actuator sleeve is supported by axially deflectable spring elements against the housing. The optics carrier may be moveable relative to the actuator sleeve in a rotational manner. This rotational movement may result in a translational movement along or opposite to the optical axis.

The actuator sleeve may thus form a sleeve around the optics carrier. An assembly comprising the actuator sleeve and the optics carrier may thus be movable along a lateral direction by the translating actuator assemblies, wherein during this translation, a position of the optics carrier and the actuator sleeve with respect to a direction along or opposite to the optical axis remains constant.

During an axial translation, the actuator sleeve and the optics carrier may be supported by the glide surfaces provided at both ends of the actuator sleeve.

As the lateral movement of the optics carrier and the actuator sleeve is initiated by direct actuation of the lever assemblies onto the optics carrier, positioning tolerances due to tolerance chains may be reduced. These tolerances may be higher if the actuating lever assembly directly translates the actuator sleeve, i.e. act on the actuator sleeve, thereby indirectly translating the optics carrier.

The actuator sleeve allows for an axial movement of the optics carrier within the actuator sleeve. The actuator sleeve may comprise an inner thread that engages an outer thread of the optics carrier, wherein the optics carrier may be rotatable with respect to the housing and the actuator sleeve, and thereby translating itself via the threat along the optical axis. The optics carrier may be positioned centered in the actuator sleeve. The actuator sleeve and/or the optics carrier may preferably be rotationally symmetric.

In order to prevent that the optics carrier gets jammed or chocked or wedged with the housing, the actuator sleeve is supported at the housing by the axially deflectable spring elements. Exemplarily, if the actuator sleeve is received in the housing and the glide surfaces of the actuator sleeve abut counter glide surfaces of the housing, a normal force is exerted between actuator sleeve and housing. This normal force results in a friction between the glide surfaces and the counter glide surfaces, the friction results in a frictional force perpendicular to the normal force. If this frictional force is larger than a force that may be exerted by the translating actuator assemblies, a movement of the optics carrier is blocked. This may happen if a space between the counter glide surfaces and/or a length of the actuator sleeve have lenth tolerances.

The axially deflectable spring elements may compensate for said length tolerances that may otherwise (if not compensated for) either result in the actuator sleeve getting stuck when received in the housing or the actuator sleeve being received too loosely inside the housing, such that a tilt of the actuator sleeve and consequently also a tilt of the optics carrier may be introduced. The axially deflectable spring elements may thus bias the actuator sleeve against the counter glide surfaces of the housing with an axial spring force exerted onto the actuator sleeve. The optics carrier may be indirectly held in the actuator sleeve. Due to the axially deflectable spring elements, a frictional force lower than an actuation force that may be provided by the translating actuator assemblies may be set.

Thus, in one embodiment, the sliders of the first and second actuator assembly slide along the optics carrier along a (lateral) second or first actuating direction or a combined direction of the first and the second actuating direction, if the corresponding second and/or first actuator assembly is actuated. Both sliders may slide along the optics carrier if the optics carrier is rotated, thereby translating itself along the optical axis, whereas the actuator sleeve may remain stationary.

This embodiment is thus adapted to adjust an axial position of the optics carrier with respect to the (static) housing. When the third linear actuator lengthens or expands, this movement of the optics carrier is performed against the axially deflectable spring elements. If the third linear actuator retracts, the biased axially deflectable spring elements may push the optics carrier in the same direction. A continuous translation along the optical axis may thus be obtained in both directions.

In one embodiment of the inventive optical adjustment device a pressure ring may be fixed to the optics carrier. Said optics carrier may be supported by spring members provided on a rotatable ring that may have a threat. This embodiment is adapted for providing means for setting a bias of the axially deflectable spring elements or in order to prevent the optics carrier from being jammed or chocked inside the housing. The rotatable ring may thus be applied for setting an axially acting force of the glide surfaces of the actuator sleeve against the counter glide surfaces of the housing in order to keep a frictional force between the two glide surfaces below the force that may be applied by the linear translation actuator assemblies onto the optics carrier as well as preventing that a rotational or tilt play is present that allows the optics carrier to tilt around the optical axis. Such a tilt is to be prevented in any case. Consequently, even if the glide surfaces are modified and/or by application of different grease members or lubricants, frictional conditions are modified. The rotatable ring may be used to set the axially deflectable spring members to an optimal bias.

The glide surfaces of the actuator sleeve as well as the counter glide surfaces of the housing may have the form of an annulus, but may also have any combination of an inner or outer shape comprising an arbitrary number of edges. For instance, a hexagonal inner contour and a (larger) hexagonal outer contour. The annulus shape is, however, preferred as it may reduce production costs.

The actuator sleeve may comprise at least one flattened structure and/or at least one guiding feature that is adapted to block any rotation around the optical axis during interaction of the inner thread of the actuator sleeve and the outer thread of the optics carrier.

In yet another embodiment, such a flattened surface and/or guiding feature may be provided at the optics carrier, wherein the actuator sleeve is rotated, thereby translating the optics carrier along or opposite the optical axis by means of the inner thread of the actuator sleeve interacting with the outer thread of the optics carrier. In this embodiment, a further holding sleeve may be provided that comprises the glide surfaces and which may receive the actuator sleeve.

Any of the previously described embodiments of the inventive optical adjustment device may be provided in an embodiment of the inventive microscope. In said microscope the optical adjustment device may be adapted to optically adjust output light provided by the microscope, in particular provided at an optical output port of the microscope for imaging on the imaging device. The inventive optical adjustment device may be adapted to modify an imaging position of the output light in a plane essentially perpendicular to the optical axis and may be further adapted to modify a focus position of the output light on the imaging device, i.e. adapted to refer course to output light for obtaining an image by the imaging device with the lowest blur possible.

In another advantageous embodiment of the inventive microscope the optical output may be a first optical output and the imaging device may be a first imaging device, wherein the microscope may further comprise a second optical output in addition to the first optical output, the second optical output may be adapted to output light of the microscope to a second imaging device, wherein an embodiment of the inventive optical adjustment device may be arranged in an optical path between the first optical output and the first imaging device or the second optical output and the second imaging device.

This embodiment of the microscope has the advantage that any microscope or a microscope system that may already comprise one imaging device, may be provided with a second imaging device. Even if two or more imaging devices are mounted to the microscope via centering mechanical connectors like for instance a C-mount, minor differences between the image is generated by the first and the second imaging device may be present. This drawback may be overcome by providing an embodiment of the inventive optical adjustment device between one of the optical outputs and one of the first or second imaging device.

The microscope that comprises one imaging device and that is improved by providing an additional second imaging device may examplarily be a Thunder Imaging System^{™}.

This embodiment of the inventive microscope may therefore be adapted to synchronize two or more images recorded by the at least two imaging devices. In particular, a second image recorded by the second imaging device may be adjusted in terms of its field of view and it's a focus, such that it corresponds to the first image recorded by the first imaging device.

This embodiment may therefore allow to compensate for any misalignment or mismatch of the second imaging device.

The first imaging device and/or the second imaging device may be embodied as a camera.

The so synchronized at least two images provided by this embodiment of the microscope may be further processed by an image processor, for instance by a computer. By the mechanical synchronization of the optical carriers to each other for synchronizing the at least two images obtained, processing the images may start without any preceding image or data processing for synchronizing the field of view and focus.

Any embodiment of the inventive optical adjustment device and inventive microscope may comprise a processor or may be controlled by a processor.

A computer implemented method may actuate at least one of the translating actuator assemblies of the inventive optical adjustment device depending on a comparison value obtained from a comparison of a first image recorded by the first imaging device and a second image recorded by the second imaging device. The computer implemented method may comprise adjusting the optical axis depending on the comparison value.

A processor may be provided that is adapted to perform this method.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

In the following, the invention is explained in more detail on the basis of embodiments with reference to the accompanying drawings. Individual features of an embodiment can be omitted in accordance with the above explanations if the technical effect of these features is not important for a particular application. Conversely, features not present in an embodiment shown below can be added in accordance with the above explanations if their technical effect is important for a particular application.

In the drawings and the description below, the same reference numerals are used for elements that correspond to each other in terms of function and/or structure for the sake of simplicity.

In the figures:
- Fig. 1: shows an embodiment of the inventive optical adjustment device;
- Fig. 2: shows a detailed view of the embodiment of the inventive optical adjustment device of Fig. 1;
- Fig. 3: shows another detailed view of the embodiment of the inventive optical adjustment device of Fig. 1 from another perspective; and
- Fig. 4: shows the inventive optical adjustment device in a cut view, the cut being along the optical axis.

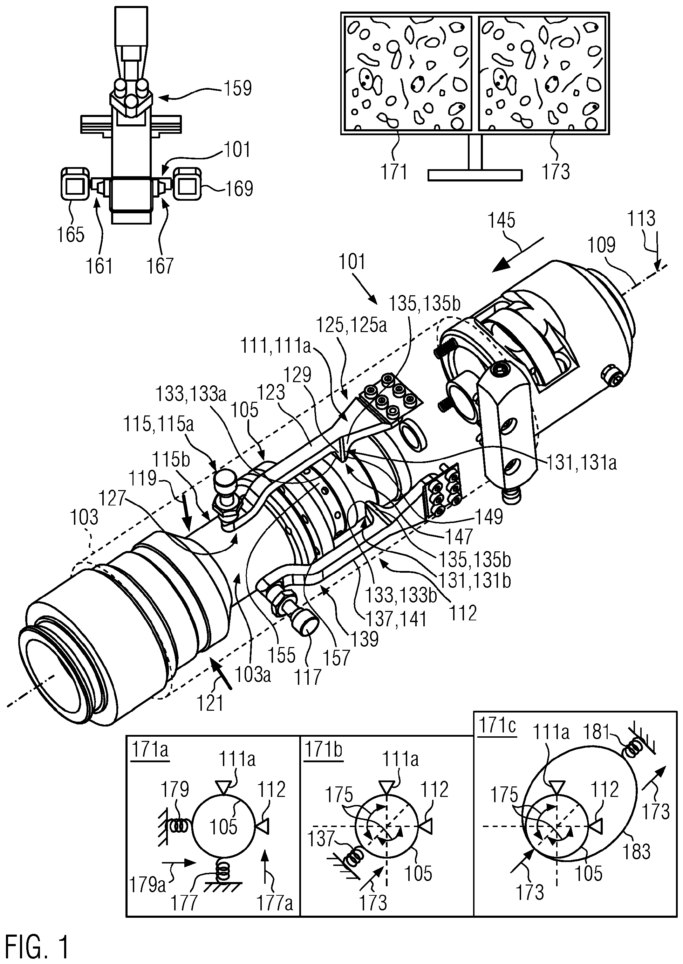

In Fig. 1, an embodiment of the inventive optical adjustment device 101 is shown in a perspective view. The optical adjustment device 101 comprises a housing 103 and an optics carrier 105. In the figure, the housing 103 is only indicated, i.e. shown transparent in order to make the optics carrier 105 visible.

The optics carrier 105 may be an inner optics carrier and the housing 103 may be an outer housing. The optics carrier 105 may be entirely received within the housing 103.

The optics carrier 105 is adapted to support at least one optical element 107 (not shown in the figure), alternatively, the optics carrier 105 comprises or supports a system of optical elements (also not visible in the figure). The at least one optical element 107 has an optical axis 109.

The optical adjustment device 101 further comprises a translating actuator assembly 111, which is a first translating actuator assembly 111a. The translating actuator assembly 111 is adapted to translate the optics carrier 105 along a lateral direction 113 with respect to the housing 103. That lateral direction 113 is oriented essentially perpendicular to the optical axis 109.

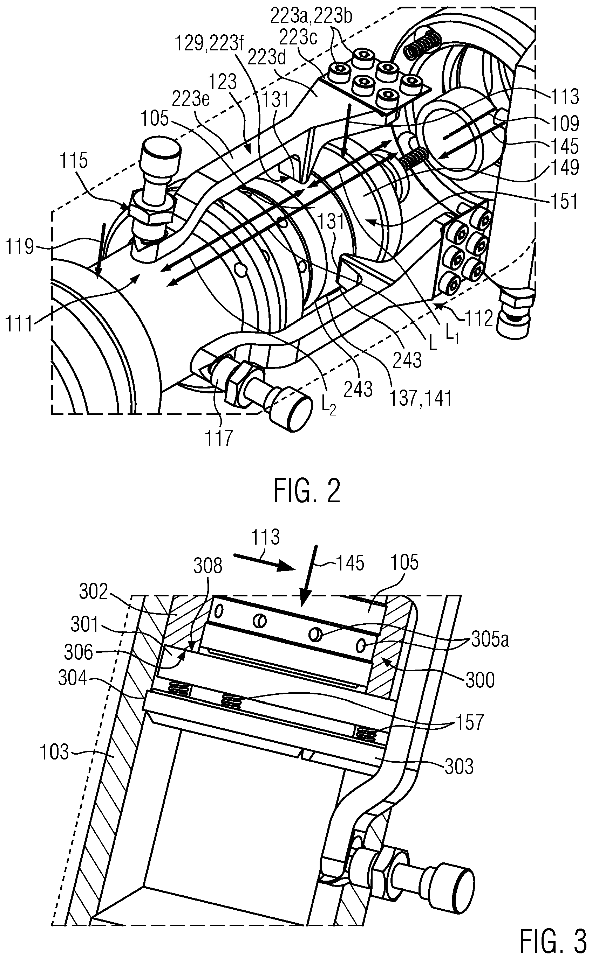

The translating actuator assembly 111 comprises a linear actuator 115 which may for instance be embodied as a micrometer screw 115a. The linear actuator 115 is fixed relative to the housing 103, wherein an actuation part 115b may extend towards an interior 103a of the housing 103 or retract from it. The actuation part 115b abuts a free end 127 of a lever 123 that is pivotably received within the housing 103. A portion 125 of the lever 123 is fixed relative to the housing 103 by attachment means 223a, e.g. by screws 223b that fix the portion 225 of the lever 123 to the housing 103 (see Figs. 1 and 2).

In the embodiment shown, the lever 103 is pivotable because of a film hinge 223c. Between a fixed end 125a and the free end 127 the lever comprises an actuation section 129, wherein the translating actuator assembly 111 abuts and displaces the optics carrier 105 via this actuation section 129 upon actuation of the linear actuator 115.

As shown in Fig. 2, the lever 123 has a length L, wherein lever arms 223d and 223e have a corresponding lever arm length of L₁ and L₂, respectively. The lever 123 abuts the optics carrier 105 with the actuation section 129, which forms a fulcrum 223f.

By a ratio of L₁ to L a translating distance along the lateral direction 113 may be only a fraction of the translating distance of the linear actuator 115. The linear actuator 115 is adapted to translate the optics carrier 105 along an actuating direction 119.

The optical adjustment device 101 further comprises two sliders 131, a first slider 131a and a second slider 131b, that slidingly rest against the optics carrier 105. The sliders 131 in the embodiment shown in the figures each comprise a slide surface 133 that is oriented essentially parallel to the corresponding actuating direction 119 or 121.

Thus, the slide surface 133 of the first slider 131a is oriented parallel to the second actuating direction 121, whereas the slide surface 133 of the second slider 131B is oriented parallel to the first actuating direction 119. Accordingly, each slider 131, the first slider 131a and the second slider 131b comprises a slide member 135, namely a first slide member 135a and a second slide member 135b. Each of the slide members 135a and 135b is guided along the corresponding slide surface 133 (i.e. a first slide surface 133a and a second slide surface 133b) along the first actuating direction 119 or the second actuating direction 121, respectively. In the embodiment shown, the slide surfaces 133 of the first and/or the second slider 131a, 131b, i.e. the first slide surface 133a and/or the second slide surface 133b, may be embodied as a line-shaped support which is in contact or engagement with an outer surface of the optics carrier 105. In other embodiments (not shown), the slide surfaces 133 may comprise a different shape, exemplarily and not limiting: rectangular.

The optical adjustment device 101 further comprises a spring assembly 137 that is provided on a side 139 of the optics carrier 105 located opposite to the translating actuator assembly 111. The spring assembly 137 is biasing the optics carrier 105 towards the translating actuator assembly 111, i.e. opposite to the actuating direction 119. The spring assembly 137 is supported by the housing 103 and basically provided opposite to the slider 131. The spring assembly 137 may be embodied as a leaf spring 141.

The above-described situation and positioning of the spring assembly 137 is schematically shown in tile 171b in which the optics carrier 105, the first translating actuator assembly 111a, the second translating actuator assembly 112 and the spring assembly 137 is schematically shown. A spring force 173 of the spring assembly 137 acts under an angle 175 of approximately 135 degrees to the first translating actuator assembly 111a and the second translating actuator assembly 112.

Further possible embodiments, which are not limiting the present invention, are shown in tiles 171a and 171c. In tile 171a each of the first and second translating actuator assemblies 111a, 112 are provided with a corresponding first spring 177 and second spring 179. It is to be noted that each spring shown in the tiles 171a-171c is only schematically shown as a coil spring, whereas all possible spring geometries may be applied in further possible embodiments of the invention.

Each of the first and second springs 177, 179 exert a first and second spring force 177a, 179a directed towards the first or second translating actuator assembly 111a, 112, respectively. If only one spring assembly 137 is provided, the spring force 173 (tile 171b) is split into rectangular components acting against the first and the second translating actuator assembly 111a and 112, respectively. Those split components are not shown here.

Finally, in tile 171c, a pull spring 181 is provided that generates a spring force. The spring force 173 acting under an angle 175 of approximately 135° onto the optics carrier 105 via a pull member 183.

If seen along an axial direction 145, an axial position 147 of the actuation section 129 is located between at least two bearing points 243 that are spaced apart from one another in the axial direction 145, wherein the axial direction is oriented parallel to the optical axis 109.

The optical carrier 105 comprises a notch 149 it is provided circumferentially around the optical axis 109 on an outer surface 151 of the optics carrier 105.

The optical adjustment device 101 further comprises a second translating actuator assembly 112 in addition to the first translating actuator assembly 111. The second translating actuator assembly 112 comprises a second linear actuator 117 that is also supported at the housing 103 and which has a second actuating direction 121 that is essentially perpendicular to the optical axis 109 and different from the first actuating direction 119. Preferably, the first actuating direction 119 is perpendicular to the second actuation direction 121.

As can be seen, the first and second translating actuator assemblies 111, 112 are embodied identical to one another. In other embodiments of the inventive optical adjustment device 101, they may be different from one another as well.

Further, the actuation section 129 of the first actuator assembly 111a represents or forms the first slider 131a for the second actuator assembly 112. Accordingly, the actuation section 129 of the second actuator assembly 112 represents or forms the slider 131 for the first actuator assembly 111a.

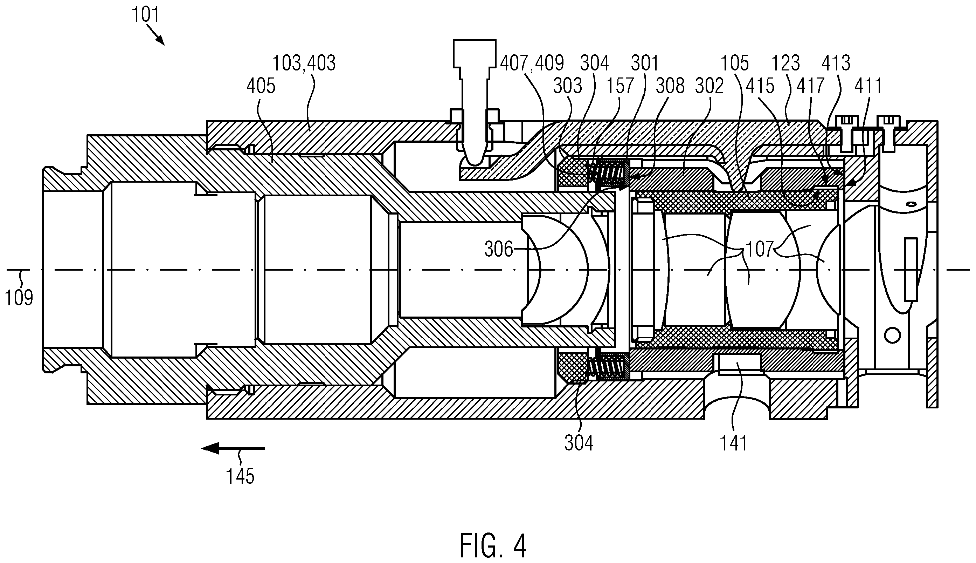

The optical adjustment device 101 may, in one embodiment, comprise an axial translating actuator assembly 300 which will be described with reference to Figs. 3 and 4.

In the embodiment comprising an axial translating actuator assembly 300, the optics carrier 105 is received within an actuator sleeve 302 which abuts a pressure ring 301. The pressure ring 301 is supported by a rotatable ring 303, wherein the rotatable ring 303 is attached to the housing 103 by means of a threat 304.

The pressure ring 301 is supported by the rotatable ring 303 via axially deflectable spring elements which are exemplary shown as coil springs in Figs. 3 and 4. By rotating the rotatable ring 303 a relative position of the pressure ring 301 and the rotatable ring 303 is altered with respect to one another. The spring elements 157 are further compressed or relaxed by this altered positioning and a pressure of the pressure ring 301 onto the actuator sleeve 302 may be set to a predetermined value.

In this embodiment, the lateral movement of the optics carrier 105 by actuating the first and/or second translating actuator assembly 111a, 112, a first glide surface 306 provided at the actuator sleeve 302 glides or slides along or opposite to the lateral direction 113 along a second glide surface 308 (that is a first counter glide surface 308) that is provided at the pressure ring 301. In the embodiment shown, the first and the second glide surfaces 306, 308 are embodied in the shape of an annulus. Different shapes of said glide surfaces 306, 308 are conceivable.

Setting the pressure between pressure ring 301 and the actuator sleeve 302 may be factory set in dependence on the characteristics of the spring elements 157, frictional coefficients of the material of the pressure ring 301 and the actuator sleeve 302 as well as possible lubricants applied thereto.

In Fig 4 a cut view of the inventive optical adjustment device 101 is shown, the cut being in the optical axis 109. The housing 103 supports the rotatable ring 303 by means of the thread 304. In the embodiment shown in Fig 4, the rotatable ring 303 comprises an outer thread and the housing 103 comprises an inner thread.

As can be seen, the housing 103 is embodied as a first housing part 403 and a second housing part 405 is provided. Thus, in a different embodiment of the present invention, the rotatable ring 303 may comprise an inner threat (not shown) that engages with an outer thread of the second housing part 45.

Via the thread 304, the rotatable ring 303 may be relocated along the optical axis 109, i.e. along the axial direction 145. The rotatable ring 303 may thus be relocated with respect to the pressure ring 301.

The rotatable ring 303 supports the axially deflectable spring elements 157 that are received within a receptacle 407 of the pressure ring 301. The receptacle 407 is embodied as a circumferential notch 409 that opens in the axial direction 145.

The pressure ring 301 provides the second glide surface 308 (also: the first counter glide surface 308) and the actuator sleeve 302 provides the first glide surface 306. A pressure between the two glide surfaces 306, 308 is set by means of the rotatable ring 303.

On the opposite side of the actuator sleeve 302 a third glide surface 411 and a fourth glide surface 413 is provided at the actuator sleeve 302 and the housing 103, respectively.

The fourth glide surface 413 may be referred to as second counter glide surface 413.

The actuator sleeve 302 is received between the second glide surface 308 and the fourth glide surface 413, wherein a pressure between the actuator sleeve 302 and those glide surfaces 408, 413 is set by the rotatable ring 303.

The actuator sleeve 302 of the embodiment shown receives the optics carrier 105 that carries several optical elements 107.

In a direction perpendicular to the optical axis 109, the optics carrier 105 is supported by the levers 123 and by the leaf spring 141.

If the optics carrier 105 is translated by means of the lever 123, also the actuator sleeve 302 is moved along with the optics carrier 105. Further, the optics carrier 105 comprises an outer thread 415, this outer thread 415 being engaged with an inner thread 417 of the actuator sleeve 302.

In Fig. 3, a non-cut view of the optics carrier 105 is provided, that shows tool receptacles 305a, wherein in these tool receptacles 305a a tool may be inserted through elongated holes provided in the actuator sleeve 302 (the tool or elongated holes are not shown in the figures), such that the optics carrier 105 may be rotated around the optical axis 109, thereby translating itself, i.e. the optics carrier 105 along or opposite to the axial direction 145 by means of the interaction between the outer thread 415 of the optics carrier 105 and the inner thread 417 of the actuator sleeve 302. As the optics carrier 105 is received within the actuator sleeve 302, that abuts against the housing by means of the four glide surfaces 306, 308, 411 and 413, a tilt of the same is prevented. Further, the abutment of the lever 123 and the leaf spring 141 prevent any movement along a direction perpendicular to the optical axis 109. The direct abutment of the lever 123 and the leaf spring 141 to the optics carrier 105 is helpful for reducing the tolerances that build up in the tolerance chain if for instance the actuator sleeve 302 would be directly translated by means of the lever 123 and the optics carrier 105 would be translated indirectly via the actuator sleeve 302.

Fig. 1 also shows a microscope 159 that comprises an embodiment of the inventive optical adjustment device 101. The microscope 159 comprises an optical output 161 which is adapted to output light 163 to an imaging device 165.

Further, the microscope 159 comprises in addition to the first optical output 161 a second optical output 167 which is also adapted to output light 163 of the microscope 159 but to a second imaging device 169.

Between either of the first imaging device 165 and the first optical output 161 or the second imaging device 169 and the second optical output 167, an embodiment of the inventive optical adjustment device 101 may be provided. This allows to synchronize a first image 171 to a second image 173, that are recorded by the first imaging device 165 and the second imaging device 169, respectively.

The images 171 and 173 may be synchronized in terms of their field of view and the focus position by means of the translating actuator assemblies 111 and 112 and the axial translating actuator assembly 153, respectively.

### REFERENCE NUMERALS

- 101: optical adjustment device
- 103: housing
- 105: optics carrier
- 107: optical element
- 109: optical axis
- 111: translating actuator assembly
- 111a: first translating actuator assembly
- 112: second translating actuator assembly
- 113: lateral direction
- 115: first linear actuator
- 115a: micrometer screw
- 117: second linear actuator
- 119: first actuating direction
- 121: second actuating direction
- 123: lever
- 123a: attachment means
- 123b: screw
- 123c: film hinge
- 125: portion
- 125a: fixed end
- 129: actuation section
- 131: slider
- 131a: first slider
- 131b: second slider
- 133: slide surface
- 133a: first slide surface
- 133b: second slide surface
- 135: slide member
- 135a: first slide member
- 135b: second slide member
- 137: spring assembly
- 139: side of the optics carrier
- 141: leaf spring
- 145: axial direction
- 147: axial position
- 149: notch
- 151: outer surface
- 155: third linear actuator
- 157: axially deflectable spring elements
- 159: microscope
- 161: optical output
- 163: light
- 165: imaging device
- 167: second optical output
- 169: second imaging device
- 171a: first tile
- 171b: second tile
- 171c: third tile
- 173: spring force
- 175: angle
- 177: first spring
- 177a: first spring force
- 179: second spring
- 179a: second spring force
- 181: pull spring
- 183: pull member

- 223d: lever arm
- 223e: lever arm
- 223f: fulcrum
- 243: bearing points

- 300: axial translating actuator assembly
- 301: pressure ring
- 302: actuator sleeve
- 303: rotatable ring
- 304: thread
- 305a: tool receptacle
- 306: first glide surface
- 308: second glide surface / first counter glide surface

- 403: first housing part
- 405: second housing part
- 407: receptacle
- 409: circumferential notch
- 411: third glide surface
- 413: fourth glide surface / second counter glide surface
- 415: outer thread of the optics carrier
- 417: inner thread of the actuator sleeve

- L: lever length
- L₁: lever arm length
- L₂: lever arm length

## Claims

1. Optical adjustment device (101), comprising a housing (103) and an optics carrier (105), the optics carrier (105) being at least partially supported translatable by the housing (103), the optics carrier (105) further comprising at least one optical element (107) with an optical axis (109), the optical adjustment device (101) further comprising a translating actuator assembly (111) adapted to translate the optics carrier (105) with respect to the housing (103) along a lateral direction (113) essentially perpendicular to the optical axis (109); wherein the translating actuator assembly (111) comprises a linear actuator (115) of which one part is fixed relative to the housing (103), the linear actuator (115) having an actuating direction (119) essentially perpendicular to the optical axis (109), wherein
the linear actuator (115) is adapted to displace the optics carrier (105) with respect to the housing (103) essentially perpendicular to the optical axis (109) along the actuating direction (119); **characterized in that**
the optical adjustment device (101) comprises a slider (131), which slidingly rests against the optics carrier (105).

2. Optical adjustment device (101) according to claim 1, wherein the optical adjustment device (101) comprises a pivotable lever (123) with a portion (125) fixed relative to the housing (103), the lever being adapted to be deflected by the linear actuator (115) and wherein the lever (123) comprises an actuation section (129), the actuation section (129) being adapted to abut and displace the optics carrier (105) upon actuation of the linear actuator (115).

3. Optical adjustment device (101) according to any one of claims 1 to 2, wherein a spring assembly (137) is provided on a side (139) of the optics carrier (105) opposite to the translating actuator assembly (111), the spring assembly (137) being adapted for biasing the optics carrier (105) towards the translating actuator assembly (111).

4. Optical adjustment device (101) according to claim 3, wherein the spring assembly (137) is adapted to act against the optics carrier (105) at at least two bearing points (243) spaced apart from each other in an axial direction (145), the axial direction (145) being oriented parallel to the optical axis (109).

5. Optical adjustment device (1) according to claim 4, wherein, in the axial direction (145), an axial position (147) of the actuation section (129) and/or an axial position (147) of the slider (131) according to claim 3 is located between the at least two bearing points (243).

6. Optical adjustment device (101) according to claims 4 or 5, wherein the optics carrier (105) comprises a notch (149) being provided circumferentially around the optical axis (109) on an outer surface (151) of the optics carrier (105) and wherein the leaf spring (141) is received within the notch (149).

7. Optical adjustment device (101) according to any one of claims 1 to 6, wherein the translating actuator assembly (111) is a first translating actuator assembly (111a) and the actuating direction (119) is a first actuating direction, and wherein the optical adjustment device (101) comprises a second translating actuator assembly (112) in addition to the first translating actuator assembly (111a), the second translating actuator assembly (112) comprising a second linear actuator (117) supported at the housing (103), the second linear actuator (117) having a second actuating direction (121) essentially perpendicular to the optical axis (109) and being different from the first actuating direction (119), wherein the second linear actuator (117) is adapted to displace the optics carrier (105) with respect to the housing (103) essentially perpendicular to the optical axis (109) along the second actuating direction (121).

8. Optical adjustment device (101) according to claim 7, wherein the first actuating direction (119) and the second actuating direction (121) are oriented essentially perpendicular to each other.

9. Optical adjustment device (101) according to claim 7 or 8, wherein the slider (131) is a first slider, and wherein the second translating actuator assembly (112) comprises a second slider in addition to the first slider, the second slider slidingly rests against the optics carrier (105).

10. Optical adjustment device (101) according to any one of claims 1 to 9, further comprising an axial translating actuator assembly (153) adapted to translate the optics carrier (105) with respect to the housing (103) along an axial direction (145), the axial direction (145) being oriented parallel to the optical axis (109).

11. Optical adjustment device (101) according to claim 10, wherein the axial translating actuator assembly (153) comprises an actuator sleeve (302) that at least partially receives the optics carrier (105) and is supported at the housing (103), the optics carrier (105) being rotatable around the axial direction and adapted to transform the rotation into a movement of itself along the axial direction (145), wherein the actuator sleeve (302) is supported by axially deflectable spring elements (157) against the housing (103).

12. Microscope (159) with an optical adjustment device (101) according to any one of claims 1 to 11, wherein the optical adjustment device is arranged in an optical path between an optical output (161) of the microscope (159) and an imaging device (165), the optical output (161) being adapted to output light (163) to the imaging device (165).

13. Microscope (159) with an optical output (161) being a first optical output (161) and an imaging device (165) being a first imaging device (165), wherein the microscope (159) further comprises a second optical output (167) in addition to the first optical output (161), the second optical output (167) being adapted to output light (163) of the microscope (159) to a second imaging device (169); wherein an optical adjustment device (101) according to any one of claims 1 to 11 is arranged in an optical path between the first optical output (161) and the first imaging device (165) or the second optical output (167) and the second imaging device (169).

## Patentansprüche

1. Vorrichtung zur optischen Anpassung (101), umfassend ein Gehäuse (103) und einen Optikträger (105), wobei der Optikträger (105) mindestens teilweise translatierbar durch das Gehäuse (103) gestützt ist, wobei der Optikträger (105) weiter mindestens ein optisches Element (107) mit einer optischen Achse (109) umfasst, wobei die Vorrichtung zur optischen Anpassung (101) weiter eine Translationsaktorbaugruppe (111) umfasst, die dazu eingerichtet ist, den Optikträger (105) in Bezug auf das Gehäuse (103) entlang einer seitlichen Richtung (113) im Wesentlichen senkrecht zu der optischen Achse (109) zu translatieren; wobei die Translationsaktorbaugruppe (111) einen Linearaktor (115) umfasst, von dem ein Teil in Bezug auf das Gehäuse (103) fixiert ist, wobei der Linearaktor (115) eine Aktuierungsrichtung (119) aufweist, die im Wesentlichen senkrecht zu der optischen Achse (109) ist, wobei der Linearaktor (115) dazu eingerichtet ist, den Optikträger (105) in Bezug auf das Gehäuse (103) im Wesentlichen senkrecht zu der optischen Achse (109) entlang der Aktuierungsrichtung (119) zu verschieben; **dadurch gekennzeichnet, dass**
die Vorrichtung zur optischen Anpassung (101) einen Gleiter (131) umfasst, der gleitend gegen den Optikträger (105) anliegt.

2. Vorrichtung zur optischen Anpassung (101) nach Anspruch 1, wobei die Vorrichtung zur optischen Anpassung (101) einen schwenkbaren Hebel (123) mit einem in Bezug auf das Gehäuse (103) fixierten Abschnitt (125) umfasst, wobei der Hebel dazu eingerichtet ist, durch den Linearaktor (115) ausgelenkt zu werden, und wobei der Hebel (123) ein Aktuierungsteilstück (129) umfasst, wobei das Aktuierungsteilstück (129) dazu eingerichtet ist, bei Aktuierung des Linearaktors (115) an dem Optikträger (105) anzustoßen und ihn zu verschieben.

3. Vorrichtung zur optischen Anpassung (101) nach einem der Ansprüche 1 bis 2, wobei eine Federbaugruppe (137) an einer Seite (139) des Optikträgers (105) gegenüberliegend der Translationsaktorbaugruppe (111) bereitgestellt ist, wobei die Federbaugruppe (137) zum Vorspannen des Optikträgers (105) zu der Translationsaktorbaugruppe (111) hin eingerichtet ist.

4. Vorrichtung zur optischen Anpassung (101) nach Anspruch 3, wobei die Federbaugruppe (137) dazu eingerichtet ist, an mindestens zwei in einer axialen Richtung (145) voneinander beabstandeten Lagerpunkten (243) gegen den Optikträger (105) zu wirken, wobei die axiale Richtung (145) parallel zu der optischen Achse (109) orientiert ist.

5. Vorrichtung zur optischen Anpassung (1) nach Anspruch 4, wobei sich in der axialen Richtung (145) eine axiale Position (147) des Aktuierungsteilstücks (129) und/oder eine axiale Position (147) des Gleiters (131) nach Anspruch 3 zwischen den mindestens zwei Lagerpunkten (243) befindet.

6. Vorrichtung zur optischen Anpassung (101) nach einem der Ansprüche 4 oder 5, wobei der Optikträger (105) eine Kerbe (149) umfasst, die an einer Außenfläche (151) des Optikträgers (105) umfänglich um die optische Achse (109) herum bereitgestellt ist, und wobei die Blattfeder (141) innerhalb der Kerbe (149) aufgenommen ist.

7. Vorrichtung zur optischen Anpassung (101) nach einem der Ansprüche 1 bis 6, wobei die Translationsaktorbaugruppe (111) eine erste Translationsaktorbaugruppe (111a) ist und die Aktuierungsrichtung (119) eine erste Aktuierungsrichtung ist und wobei die Vorrichtung zur optischen Anpassung (101) eine zweite Translationsaktorbaugruppe (112) zusätzlich zu der ersten Translationsaktorbaugruppe (111a) umfasst, wobei die zweite Translationsaktorbaugruppe (112) einen zweiten Linearaktor (117) umfasst, der an dem Gehäuse (103) gestützt ist, wobei der zweite Linearaktor (117) eine zweite Aktuierungsrichtung (121) aufweist, die im Wesentlichen senkrecht zu der optischen Achse (109) ist und sich von der ersten Aktuierungsrichtung (119) unterscheidet, wobei der zweite Linearaktor (117) dazu eingerichtet ist, den Optikträger (105) in Bezug auf das Gehäuse (103) im Wesentlichen senkrecht zu der optischen Achse (109) entlang der zweiten Aktuierungsrichtung (121) zu verschieben.

8. Vorrichtung zur optischen Anpassung (101) nach Anspruch 7, wobei die erste Aktuierungsrichtung (119) und die zweite Aktuierungsrichtung (121) im Wesentlichen senkrecht zueinander orientiert sind.

9. Vorrichtung zur optischen Anpassung (101) nach Anspruch 7 oder 8, wobei der Gleiter (131) ein erster Gleiter ist, und wobei die zweite Translationsaktorbaugruppe (112) einen zweiten Gleiter zusätzlich zu dem ersten Gleiter umfasst, wobei der zweite Gleiter gleitend gegen den Optikträger (105) anliegt.

10. Vorrichtung zur optischen Anpassung (101) nach einem der Ansprüche 1 bis 9, weiter umfassend eine Axialtranslations-Aktorbaugruppe (153), die dazu eingerichtet ist, den Optikträger (105) in Bezug auf das Gehäuse (103) entlang einer axialen Richtung (145) zu translatieren, wobei die axiale Richtung (145) parallel zu der optischen Achse (109) orientiert ist.

11. Vorrichtung zur optischen Anpassung (101) nach Anspruch 10, wobei die Axialtranslations-Aktorbaugruppe (153) eine Aktorhülse (302) umfasst, die den Optikträger (105) mindestens teilweise aufnimmt und an dem Gehäuse (103) gestützt ist, wobei der Optikträger (105) um die axiale Richtung herum drehbar ist und dazu eingerichtet ist, die Drehung in eine Bewegung seiner selbst entlang der axialen Richtung (145) umzuwandeln, wobei die Aktorhülse (302) durch axial auslenkbare Federelemente (157) gegen das Gehäuse (103) gestützt ist.

12. Mikroskop (159) mit einer Vorrichtung zur optischen Anpassung (101) nach einem der Ansprüche 1 bis 11, wobei die Vorrichtung zur optischen Anpassung in einem optischen Pfad zwischen einem optischen Ausgang (161) des Mikroskops (159) und einer Abbildungsvorrichtung (165) angeordnet ist, wobei der optische Ausgang (161) dazu eingerichtet ist, Licht (163) an die Abbildungsvorrichtung (165) auszugeben.

13. Mikroskop (159) mit einem optischen Ausgang (161), der ein erster optischer Ausgang (161) ist, und einer Abbildungsvorrichtung (165), die eine erste Abbildungsvorrichtung (165) ist, wobei das Mikroskop (159) weiter einen zweiten optischen Ausgang (167) zusätzlich zu dem ersten optischen Ausgang (161) umfasst, wobei der zweite optische Ausgang (167) dazu eingerichtet ist, Licht (163) des Mikroskops (159) an eine zweite Abbildungsvorrichtung (169) auszugeben; wobei eine Vorrichtung zur optischen Anpassung (101) nach einem der Ansprüche 1 bis 11 in einem optischen Pfad zwischen dem ersten optischen Ausgang (161) und der ersten Abbildungsvorrichtung (165) oder dem zweiten optischen Ausgang (167) und der zweiten Abbildungsvorrichtung (169) angeordnet ist.

## Revendications

1. Dispositif de réglage optique (101), comprenant un boîtier (103) et un support optique (105), le support optique (105) étant au moins partiellement supporté en translation par le boîtier (103), le support optique (105) comprenant en outre au moins un élément optique (107) avec un axe optique (109), le dispositif de réglage optique (101) comprenant en outre un ensemble actionneur de translation (111) conçu pour translater le support optique (105) par rapport au boîtier (103) le long d'une direction latérale (113) sensiblement perpendiculaire à l'axe optique (109) ; dans lequel l'ensemble actionneur de translation (111) comprend un actionneur linéaire (115) dont une partie est fixe par rapport au boîtier (103), l'actionneur linéaire (115) présentant une direction d'actionnement (119) sensiblement perpendiculaire à l'axe optique (109), dans lequel l'actionneur linéaire (115) est conçu pour déplacer le support optique (105) par rapport au boîtier (103) sensiblement perpendiculairement à l'axe optique (109) le long de la direction d'actionnement (119) ; **caractérisé en ce que** le dispositif de réglage optique (101) comprend un curseur (131), qui vient en appui coulissant contre le support optique (105).

2. Dispositif de réglage optique (101) selon la revendication 1, dans lequel le dispositif de réglage optique (101) comprend un levier pivotant (123) avec une partie (125) fixe par rapport au boîtier (103), le levier étant conçu pour être dévié par l'actionneur linéaire (115) et dans lequel le levier (123) comprend une section d'actionnement (129), la section d'actionnement (129) étant conçue pour venir en butée et déplacer le support optique (105) lors de l'actionnement de l'actionneur linéaire (115).

3. Dispositif de réglage optique (101) selon l'une quelconque des revendications 1 à 2, dans lequel un ensemble ressort (137) est disposé sur un côté (139) du support optique (105) opposé à l'ensemble actionneur de translation (111), l'ensemble ressort (137) étant adapté pour solliciter le support optique (105) vers l'ensemble actionneur de translation (111).

4. Dispositif de réglage optique (101) selon la revendication 3, dans lequel l'ensemble ressort (137) est conçu pour agir contre le support optique (105) en au moins deux points d'appui (243) espacés l'un de l'autre dans une direction axiale (145), la direction axiale (145) étant orientée parallèlement à l'axe optique (109).

5. Dispositif de réglage optique (1) selon la revendication 4, dans lequel, dans la direction axiale (145), une position axiale (147) de la section d'actionnement (129) et/ou une position axiale (147) du curseur (131) selon la revendication 3 est située entre les au moins deux points d'appui (243).

6. Dispositif de réglage optique (101) selon les revendications 4 ou 5, dans lequel le support optique (105) comprend une encoche (149) qui est disposée de manière circonférentielle autour de l'axe optique (109) sur une surface externe (151) du support optique (105) et dans lequel le ressort à lame (141) est reçu à l'intérieur de l'encoche (149).

7. Dispositif de réglage optique (101) selon l'une quelconque des revendications 1 à 6, dans lequel l'ensemble actionneur de translation (111) est un premier ensemble actionneur de translation (111a) et la direction d'actionnement (119) est une première direction d'actionnement, et dans lequel le dispositif de réglage optique (101) comprend un second ensemble actionneur de translation (112) en plus du premier ensemble actionneur de translation (111a), le second ensemble actionneur de translation (112) comprenant un second actionneur linéaire (117) supporté au niveau du boîtier (103), le second actionneur linéaire (117) présentant une seconde direction d'actionnement (121) sensiblement perpendiculaire à l'axe optique (109) et qui est différente de la première direction d'actionnement (119), dans lequel le second actionneur linéaire (117) est conçu pour déplacer le support optique (105) par rapport au boîtier (103) sensiblement perpendiculairement à l'axe optique (109) le long de la seconde direction d'actionnement (121).

8. Dispositif de réglage optique (101) selon la revendication 7, dans lequel la première direction d'actionnement (119) et la deuxième direction d'actionnement (121) sont orientées sensiblement perpendiculairement l'une à l'autre.

9. Dispositif de réglage optique (101) selon la revendication 7 ou 8, dans lequel le curseur (131) est un premier curseur, et dans lequel le second ensemble actionneur de translation (112) comprend un second curseur en plus du premier curseur, le second curseur venant en appui coulissant contre le support optique (105).

10. Dispositif de réglage optique (101) selon l'une quelconque des revendications 1 à 9, comprenant en outre un ensemble actionneur de translation axiale (153) conçu pour translater le support optique (105) par rapport au boîtier (103) le long d'une direction axiale (145), la direction axiale (145) étant orientée parallèlement à l'axe optique (109).

11. Dispositif de réglage optique (101) selon la revendication 10, dans lequel l'ensemble actionneur de translation axiale (153) comprend un manchon d'actionneur (302) qui reçoit au moins partiellement le support optique (105) et est supporté au niveau du boîtier (103), le support optique (105) pouvant tourner autour de la direction axiale et étant conçu pour transformer la rotation en un mouvement propre le long de la direction axiale (145), dans lequel le manchon d'actionneur (302) est supporté par des éléments ressorts pouvant être déviés axialement (157) contre le boîtier (103).

12. Microscope (159) avec un dispositif de réglage optique (101) selon l'une quelconque des revendications 1 à 11, dans lequel le dispositif de réglage optique est agencé dans un chemin optique entre une sortie optique (161) du microscope (159) et un dispositif d'imagerie (165), la sortie optique (161) étant conçue pour émettre en sortie une lumière (163) vers le dispositif d'imagerie (165).

13. Microscope (159) avec une sortie optique (161) qui est une première sortie optique (161) et un dispositif d'imagerie (165) qui est un premier dispositif d'imagerie (165), dans lequel le microscope (159) comprend en outre une seconde sortie optique (167) en plus de la première sortie optique (161), la seconde sortie optique (167) étant conçue pour émettre en sortie une lumière (163) du microscope (159) vers un second dispositif d'imagerie (169) ; dans lequel un dispositif de réglage optique (101) selon l'une quelconque des revendications 1 à 11 est disposé dans un chemin optique entre la première sortie optique (161) et le premier dispositif d'imagerie (165) ou la seconde sortie optique (167) et le second dispositif d'imagerie (169).
